Europäisches Patentamt

European Patent Office

Office européen des brevets

(11) Numéro de publication: **0 145 614**
A2

## (12) DEMANDE DE BREVET EUROPEEN

(21) Numéro de dépôt: **84420176.4**

(22) Date de dépôt: **17.10.84**

(51) Int. Cl.⁴: **B 01 D 13/01**, A 61 M 1/18

(30) Priorité: **21.10.83 FR 8317021**

(43) Date de publication de la demande: **19.06.85**
**Bulletin 85/25**

(84) Etats contractants désignés: **BE CH DE GB IT LI NL SE**

(71) Demandeur: **HOSPAL INDUSTRIE, 7, Avenue Lionel Terray, F-69330 Meyzieu (FR)**

(72) Inventeur: **Cronenberger, Michel, Saint-Sorlin, F-69440 Mornant (FR)**
Inventeur: **Nadaud, Jean, 34bis, rue du Grisard, F-69800 Saint-Priest (FR)**
Inventeur: **Quaglia, Roger, 20, Clos des Chassagnes, F-69350 La Mulatiere (FR)**

(74) Mandataire: **Vogt, Bernard et al, RHONE-POULENC RECHERCHES Service Brevets Chimie et Polymères Centre de Recherches de Saint-Fons B.P. 62, F-69192 St-Fons Cédex (FR)**

(54) **Appareil à fibres creuses semi-perméables dans lequel, au moins dans une masse d'empotage, un joint est disposé dans une gorge.**

(57) L'invention concerne un appareil à fibres creuses, comprenant une enceinte (1) allongée aux deux extrémités de laquelle se trouve une masse d'empotage (8) traversée par les fibres creuses (7) s'étendant à l'intérieur de l'enceinte, l'extrémité ouverte des fibres creuses étant généralement dans le même plan que celui de la face externe (9) à l'enceinte de chaque masse (8) d'empotage, un couvercle (10) à chaque extrémité de l'enceinte, chacun d'eux comprenant une tubulure (11) pour l'arrivée ou la sortie du fluide circulant à l'intérieur des fibres, au moins une tubulure (3) pour le passage d'un fluide entre la paroi externe des fibres creuses (7) et l'extérieur de l'enceinte (1), un joint (12) assurant l'étanchéité entre chaque masse d'empotage (8) et le couvercle (10) adjacent, caractérisé en ce que chaque joint (12) se trouve dans une gorge (13) prévue dans la masse d'empotage (8).

Appareil utilisable notamment dans le domaine médical, par exemple comme rein artificiel.

1

## APPAREIL A FIBRES CREUSES SEMI-PERMEABLES DANS LEQUEL, AU MOINS DANS UNE MASSE D'EMPOTAGE, UN JOINT EST DISPOSE DANS UNE GORGE

La présente invention concerne un appareil à fibres creuses, utilisable notamment comme rein artificiel.

Un problème, dans la fabrication de ce genre d'appareils, provient de l'étanchéité qui doit être rigoureuse au niveau des extrémités ouvertes des fibres creuses, entre le couvercle et la masse d'empôtage dans laquelle les extrémités des parois externes des fibres creuses sont noyées.

La solution apportée à ce problème par l'appareil selon la présente invention présente notamment pour avantage d'être simple, de nécessiter le minimum de matière d'empôtage, de ne nécessiter qu'une seule matière d'étanchéité, d'exiger le minimum d'étapes lors de la fabrication, d'être rapide à réaliser et d'être facilement mise en oeuvre sur des machines automatiques de fabrication en grandes séries de tels appareils à fibres creuses.

La solution apportée :

- permet de réaliser l'étanchéité en s'affranchissant des tolérances des composants constituant l'assemblage, tels que l'enceinte et le couvercle,

- facilite la manipulation et l'automatisation par robots du fait que les éléments se positionnent naturellement les uns par rapport aux autres et qu'à aucun moment des pièces composites (couvercle + joint par exemple) ne sont manipulées,

- permet de réaliser chaque compartiment du sang du couvercle de l'appareil de façon rigoureuse, reproductive, géométrique, fixe et bien déterminée.

Il a maintenant été trouvé et c'est ce qui fait l'objet de la présente invention, un appareil à fibres creuses semi-perméables, utilisable notamment comme rein artificiel, comprenant une enceinte (1) allongée aux deux extrémités de laquelle se trouve une masse d'empôtage (8) traversée par les fibres creuses (7) s'étendant à l'intérieur de l'enceinte, l'extrémité ouverte des fibres creuses étant généralement dans le même plan que celui de la face externe (9) à l'enceinte (1) de chaque masse (8) d'empôtage, un couvercle (10) à chaque extrémité de l'enceinte, chacun d'eux comprenant une tubulure (11) pour l'arrivée ou la sortie du fluide circulant à l'intérieur des fibres, au moins une tubulure (3) pour le passage d'un fluide entre la paroi externe des fibres creuses (7) et l'extérieur de l'enceinte (1), un joint (12) assurant l'étanchéité entre chaque masse d'empôtage (8) et le couvercle (10) adjacent, caractérisé en ce que chaque joint (12) se trouve dans une gorge (13) prévue dans la masse d'empôtage (8).

La description de l'appareil selon la présente invention sera mieux comprise à l'aide des figures ci-jointes, qui illustrent, à titre d'exemples non limitatifs, des modes de réalisation et d'obtention d'un tel appareil.

La figure 1 représente en coupe, selon son axe longitudinal, une extrémité d'un appareil selon la présente invention.

La figure 2 représente, en coupe, une manière d'obtenir un appareil selon la figure 1.

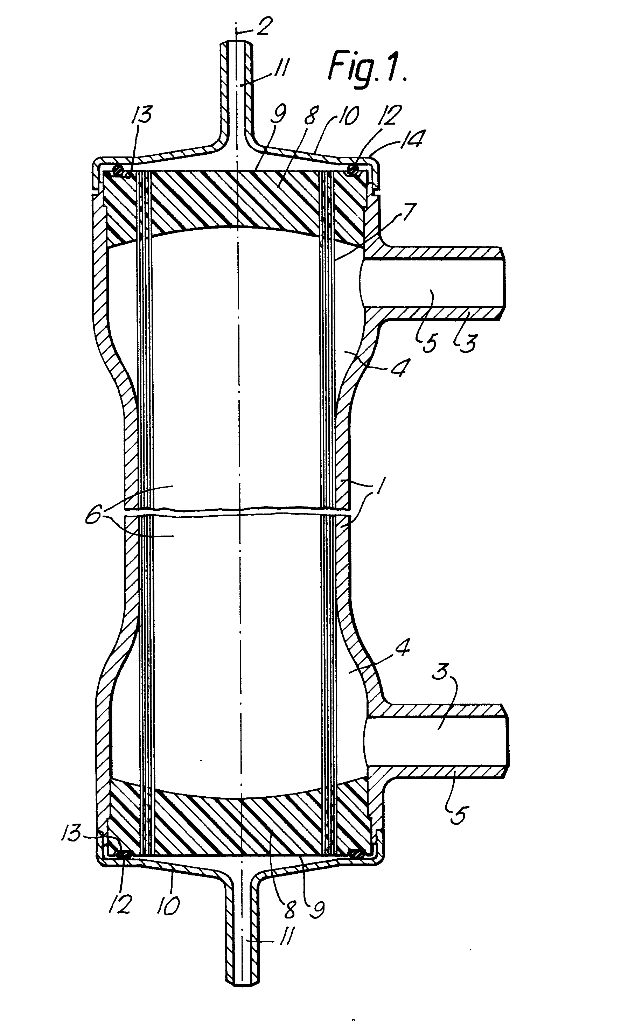

L'appareil, selon la figure 1, dont seule une extrémité a été représentée pour la simplification du dessin, mais qui en fait en comprend avantageusement deux sensiblement identiques, comprend une enceinte (1), généralement en matière plastique, de préférence transparente, par exemple en polycarbonate. Cette enceinte (1), ou enveloppe rigide est généralement de forme allongée, la ligne brisée (2) représentant l'axe longitudinal de cette enceinte (1). Cette enceinte (1) comprend une tubulure (3) permettant de mettre en relation la partie interne (4) de l'enceinte (1) avec l'extérieur de l'enceinte (1) grâce à un canal (5) interne de cette tubulure (3). L'enceinte (1) est avantageusement de section circulaire et comprend intérieurement un faisceau (6) de fibres creuses (7) semi-perméables, dont seules celles sur le pourtour du faisceau ont été schématisées pour la facilité du dessin. Ainsi le diamètre du faisceau (6) de fibres creuses (7) correspond sensiblement à la section interne de l'enceinte (1) sur la majeure partie de la longueur de cette dernière sauf vers ses extrémités. En effet lorsque l'appareil selon la présente invention est utilisé en hémodialyse, la section interne de l'enceinte (1) est plus large vers les tubulures (5) de façon à permettre une meilleure répartition du fluide circulant à l'extérieur des fibres (7), ce fluide étant le plus souvent le dialysat, tandis que le sang circule à l'intérieur des fibres (7). L'extrémité de l'enceinte se termine par une masse d'empôtage (8) dans laquelle les extrémités des parois externes des fibres creuses (7) sont noyées. Sur la face (9) externe à l'enceinte (1) de la masse d'empôtage (8) débouchent les extrémités ouvertes des fibres creuses (7). Ainsi la partie interne de chaque fibre creuse (7) est en communication avec l'extérieur de l'enceinte.

Chaque masse d'empôtage (8) est généralement en une matière polymérique durcie, tenant lieu de paroi d'étanchéité à chaque extrémité de l'enceinte (1). En effet chaque masse d'empôtage adhère de manière étanche à l'extrémité de la paroi interne de l'enceinte et à la paroi externe de chaque fibre (7) vers ses extrémités. A titre de matières polymériques connues pouvant être utilisées pour la réalisation de ces masses (8) d'empôtage on peut notamment citer les résines époxy ou à base de polyuréthanes.

Chaque extrémité de l'appareil selon la présente invention comprend un couvercle (10), appelé généralement embout par le spécialiste, qui comporte un canal interne (11) d'introduction ou d'évacuation du fluide circulant à l'intérieur des fibres creuses (7). Ce couvercle (11) dont la forme correspond à celle de l'extrémité de l'enceinte (1) se raccorde à l'extrémité de cette dernière (1), généralement sur son pourtour externe.

Entre le couvercle (10) et la face (9) de la masse d'empôtage (8) se trouve un joint (12) torique, ce joint (12) étant disposé dans une gorge (13) prévue sur la face (9) de la masse d'empôtage (8). Cette gorge (13) se situe entre le pourtour de la masse d'empôtage (8) et les extrémités ouvertes des fibres creuses (7) sur la face (9) de ladite masse (8). Avantageusement cette gorge (13) est de forme trapézoïdale et son ouverture est légèrement plus large que sa base sur laquelle repose le joint (12) torique. Les dimensions de cette gorge (13) et du joint (12) torique sont telles que, lorsque le couvercle (10) est fixé à l'enceinte (1), le joint remplisse sensiblement toute la gorge (13), ce qui n'est pas représenté sur la figure 1 pour des commodités de dessin. Le couvercle (10), lorsqu'il est fixé sur l'enceinte (1) appuie par sa face interne périphérique (14) sur le joint (12) torique et ainsi une étanchéité parfaite et sûre est obtenue.

Bien évidemment la forme de la gorge (13) est nullement limitée à une forme trapézoïdale telle que celle précédemment décrite. De même le joint n'est pas obligatoirement de section circulaire, bien que cela soit préférentiel · il peut par exemple être de section rectangulaire, cruciforme, en U, en V.....

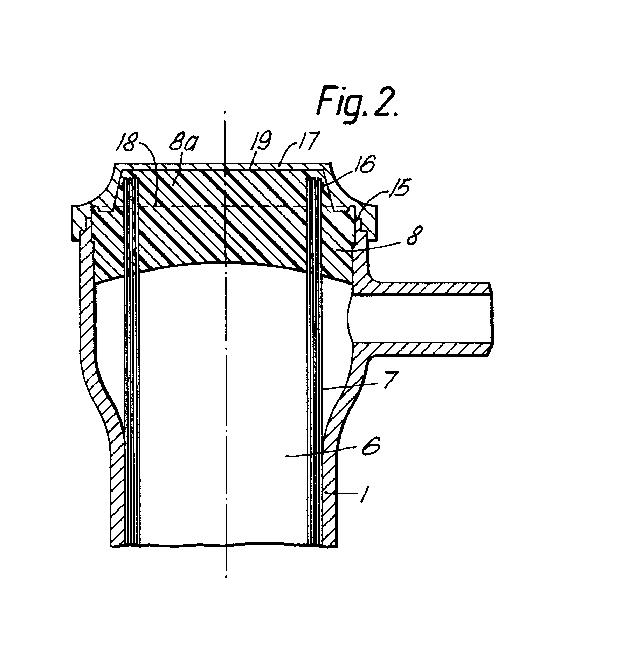

La figure 2 montre comment l'appareil selon la figure 1 peut être obtenu pour la réalisation de la gorge (13) dans la masse d'empôtage (8). Pour cela un faisceau (6) de fibres creuses (7) est disposé à l'intérieur de l'enceinte (1), les extrémités des fibres (7) du faisceau (6) allant au-delà des extrémités (15) de ladite enceinte. De façon avantageuse des moyens (16) sont prévus pour maintenir le faisceau (6) de fibres creuses (7) vers chacune de ses extrémités, ces moyens (16) pouvant être par exemple un anneau de caoutchouc disposé autour du faisceau (6). A chaque extrémité de l'enceinte (dont une seule est représentée figure 2) est placé un capuchon (17), également appelé bouchon d'empôtage, s'emboîtant sur la paroi externe de l'enceinte (1). La partie interne de ce capuchon est de forme telle que lorsque la matière d'empôtage fluide est introduite par le canal (5) de la tubulure (3), tandis que l'ensemble (enceinte + fibres creuses + capuchon) est centrifugé par une technique connue, on obtienne une masse d'empôtage (8 et 8bis) correspondant à celle représentée figure 2. En fait la masse d'empôtage obtenue comprend une partie (8) allant jusqu'à la ligne brisée (18), cette partie correspondant à la masse d'empôtage de l'appareil selon la figure 1, et une partie 8bis allant de cette ligne (18) jusqu'au fond (19) du capuchon (17) dans laquelle sont noyées les extrémités des fibres creuses (7) et le caoutchouc (16). Après durcissement de la masse d'empôtage (8 et 8bis), le capuchon, qui a été choisi en une matériau tel que la matière d'empôtage n'adhère pas à son contact, est enlevé et la partie (8bis) est sectionnée selon une technique connue en suivant la ligne (18). On obtient ainsi une masse d'empôtage (8) correspondant à celle de l'appareil selon la figure 1. Il ne reste plus alors qu'à placer le joint (12) torique dans la gorge (13), puis on fixe le couvercle (10) à l'enceinte (1) en écrasant en partie le joint (12) torique. Pour disposer le joint (12) torique dans la gorge (13) on positionne avantageusement l'extrémité de l'enceinte (1) considérée en position verticale (par rapport au sol) comme représenté sur la figure 1, l'axe longitudinal (2) de l'enceinte (1) étant perpendiculaire au sol. L'enceinte est par exemple maintenue dans cette position par la griffe d'une machine transfert. Le joint (12) torique tombe automatiquement par gravité dans la gorge (13), en provenant du bras d'une machine transfert. Le bras s'enlève et un autre bras de la machine automatique place le couvercle (10) au-dessus du joint (12) torique. Ce dernier bras peut alors se retirer et laisser place à un dispositif qui assure à la fois la pression nécessaire sur le couvercle (10) et le soude, par exemple par ultrasons, à l'extrémité de l'enceinte. Il ne reste plus qu'à recommencer la même série d'opérations sur l'autre extrémité de l'enceinte après avoir fait pivoter de 180° l'enceinte (1).

De nombreuses variantes de réalisation de l'appareil selon la présente invention sont à la portée du technicien. A titre d'exemple la section de l'enceinte (1) peut être ovale ou même applatie avec des bords arrondis. Le joint (12) torique aura la forme correspondante. En ce qui concerne les couvercles (10) de l'appareil ils peuvent bien sûr être fixés à l'enceinte (1) par vissage, par encliquetage, collage ....

En ce qui concerne le faisceau (6) de fibres creuses il peut comprendre des fibres creuses (7) tricotées, sous forme de nattes ou même spiralées autour d'un mandrin central, ce dernier pouvant dans certains cas servir d'arrivée ou d'évacuation du fluide circulant à l'extérieur des fibres creuses (7).

L'appareil selon la présente invention peut avoir des utilisations très diverses dans le domaine du génie médical. Il suffit de lui adapter les fibres creuses (7) adéquates connues pour l'application envisagée. Il peut par exemple être utilisé en hémodialyse, le sang circulant à l'intérieur des fibres de préférence tandis que le liquide de dialyse circule à l'extérieur des fibres grâce aux deux tubulures (3). Cet appareil peut être utilisé comme poumon artificiel, le sang circulant à l'intérieur des fibres (7) tandis que le mélange gazeux contenant de l'oxygène circule à l'extérieur des fibres.

Cet appareil peut être utilisé comme rein articiel à ultrafiltration, sans hémodialyse, et dans ce cas seul une tubulure (3) est nécessaire sur l'enceinte (1) pour la récupération de l'ultrafiltrat. Il en est de même pour des opérations de plasmaphérèse au cours desquelles le sang circule à l'intérieur des fibres, tandis que le plasma est récupéré à l'extérieur des fibres.

A titre d'exemple un appareil tel que celui représenté figure 1 a été obtenu en utilisant une enceinte en polycarbonate, un matériau d'empôtage en polyuréthane, un joint (12) torique en silicone, des fibres creuses en cellulose, un capuchon (17) en polypropylène.

REVENDICATIONS

1. - Appareil à fibres creuses semi-perméables, utilisable notamment comme rein artificiel, comprenant une enceinte (1) allongée aux deux extrémités de laquelle se trouve une masse d'empôtage (8) traversée par les fibres creuses (7) s'étendant à l'intérieur de l'enceinte, l'extrémité ouverte des fibres creuses étant généralement dans le même plan que celui de la face externe (9) à l'enceinte (1) de chaque masse (8) d'empôtage, un couvercle (10) à chaque extrémité de l'enceinte, chacun d'eux comprenant une tubulure (11) pour l'arrivée ou la sortie du fluide circulant à l'intérieur des fibres, au moins une tubulure (3) pour le passage d'un fluide entre la paroi externe des fibres creuses (7) et l'extérieur de l'enceinte (1), un joint (12) assurant l'étanchéité entre chaque masse d'empôtage (8) et le couvercle (10) adjacent, caractérisé en ce que chaque joint (12) se trouve dans une gorge (13) prévue dans la masse d'empôtage (8).

2. - Appareil selon la revendication 1, caractérisé en ce que chaque joint (12) se trouve dans une gorge (13) obtenue lors de la formation des masses (8) d'empôtage.

3. - Appareil selon la revendication 1 ou 2, caractérisé en ce que chaque joint (12) se trouve dans une gorge (13) obtenue lors de la centrifugation du matériau utilisé pour la réalisation de la masse d'empôtage (8) considérée.

4. - Appapreil selon l'une quelconque des revendications précédentes, caractérisé en ce que chaque joint (12) est torique et est apporté dans chaque gorge (13) lors du montage de l'appareil.

5. - Appareil selon l'une quelconque des revendications 1 à 3, caractérisé en ce que chaque joint (12) est un joint circulaire plat.

6. - Appareil selon l'une quelconque des revendications 1 à 5, caractérisé en ce que chaque joint (12) a des dimensions telles, qu'après serrage du couvercle (10) adjacent, il remplit pratiquement toute la gorge (13) dans laquelle il a été placé.

Fig.1.

0145614

Fig. 2.